# EUROPEAN PATENT APPLICATION

(11) **EP 1 109 388 A2**
(43) Date of publication of application: **20.06.2001**
(21) Application number: 00650167.0
(22) Date of filing: 25.10.2000
(51) Int. Cl.: H04M 3/51

(54) **Transaction-based administration of media gateways in a customer care center**

(30) Priority: 14.12.1999 US 461185
(71) Applicant: NORTEL NETWORKS CORPORATION, Montreal, Quebec H2Y 3Y4 (CA)
(72) Inventor: Leonard, Mark A., Anacaster, Ontario, L9G 4S5 (CA); Montemurro, Michael P., Etobicoke, Ontario, M9B 2G1 (CA); Berg, David P., Oakville, Ontario, L6M 3X5 (CA)
(74) Representative: Coyle, Philip Aidan

(57) **Abstract**

The present invention allows creation of administrative groups among heterogeneous media gateways and related equipment. The data on the equipment in the administrative groups may then be configured, maintained, and administered using transaction based processing techniques.

## Description

### FIELD OF THE INVENTION

The present invention relates to administration of media gateways, and more particularly, transaction-based administration of media gateways in a customer care center.

### BACKGROUND OF THE INVENTION

Historically, "customer care center" was a synonym for a call center, where a call center is a common interface between a commercial interest and its customers. A toll-free telephone number is often provided to customers as a source of such services as product information and technical support. To enhance the services typically offered by call centers, a number of options have been made available to customers, such as self serve access to information and services, including sales and billing inquiries. Customer care centers now bring together such varied components as call processing servers, fax response severs, world wide web response servers, interactive voice response servers and databases of customer billing and sales information.

One known model of relating two computer programs, the client/server model, is well suited to a customer care center. In such a model, one program, the client, makes a service request from another program, the server, which fulfils the request. As the power of the applications that serve customer needs increases, the processing requirements of any one of these applications are increasingly difficult to meet with a single node. Consequently, networks of nodes may be used, but only if the application can "scale" to take advantage of the combined processing power. However desirable, implementing truly scalable client/server systems is very difficult (see John Lam, "Building Scalable Apps" PC Magazine, 4/21/98, incorporated herein by reference).

In a typical organization, unfortunately, computing hardware and software employed to perform the above tasks has been chosen for their individual qualities rather than for an ability to work together in a customer care center environment. As these various server and database applications are networked together, media gateways are used to allow the applications to communicate. For instance, a customer visiting a company's web page may make a purchase. Information relating that purchase may be used to bill the customer, deliver the goods and update a customer history record. As these may happen on different systems within a company, synchronization of the data may be important.

In networking, a media gateway is a combination of hardware and software that links two different types of networks. At a customer care center, a variety of media gateways may be used between various systems. A call center server (such as the Symposium Call Center Server, from Nortel Networks Corporation of Montreal, Canada) is an example of a media gateway in that a call from one network, the public switch telephone network (PSTN) for instance, is linked (routed) to an agent at a telephone on another network, say a private branch exchange (PBX) at the customer care center. Similarly, a web response server (such as the Symposium Web Response Server, from Nortel Networks Corporation of Montreal, Canada) is a media gateway in that an e-mail message arriving from one data network, the Internet for instance, is linked (or directed) to an agent on another data network, say a local area data network (LAN) at the customer care center. An agent server (such as the Symposium Agent Server, from Nortel Networks Corporation of Montreal, Canada) may present an agent with a display of information relating to an incoming call. Once an agent is assigned to an incoming call, an agent server can use information associated with the incoming call (such as calling line identification) to present data associated with a caller likely to be placing the call, such as name and purchasing history. The associated data may be presented to the agent on an associated terminal screen. Effectively, an agent server is a media gateway because information gleaned from a telephone network may be used to present information via a data network.

In each of the above examples, information may be known about the incoming call or e-mail message. The information may be known as a result of a caller answering a number of questions presented by an Interactive Voice Response (IVR) server or by matching calling line identification with a record in a database. The information may be used to direct the incoming call or e-mail to an agent that has qualities (often called a skillset) appropriate to answering the call or e-mail message. To properly direct the call or e-mail message, the customer care center also requires general data on available agents, like the skillsets with which each one is associated, as well as specific data on individual available agents, like a telephone directory number (for a call center server), an e-mail address (for a web response server) or a terminal network address (for an agent server).

Currently, synchronization of data between heterogeneous systems must be maintained manually. This manual maintenance is labor intensive and error prone, both of which negatively affect a measure known as Total Cost Of Ownership.

### SUMMARY OF THE INVENTION

The present invention allows creation of administrative groups among heterogeneous media gateways and related equipment. The data on the equipment in the administrative groups may then be configured, maintained, and administered using transaction-based processing techniques.

In accordance with an aspect of the present invention there is provided a method of administering heterogeneous media gateways including receiving, from a client, a request relating to an administrative group, where the administrative group comprises a plurality of heterogeneous media gateways. The method further includes, using transaction-based processing techniques, communicating a gateway specific request, based on the received request, to each the media gateway in the administrative group and receiving a response to the gateway specific request from each the media gateway in the administrative group. In another aspect of the present invention there is provided an transaction-based administration server for carrying out this method. In a still further aspect of the present invention there is provided a computer media product that permits a general purpose computer to carry out this method.

In accordance with another aspect of the present invention there is provided a method of configuring an administrative group including receiving, from a client, an indication of a media gateway to add to an administrative group and an administrator with which to associate the administrative group and adding the media gateway to the administrative group associated with the administrator.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

In the figures which illustrate example embodiments of this invention:
FIG. **1** schematically illustrates a communication system for use with an embodiment of the present invention;
FIG. **2** schematically illustrates components of both a customer care center and a transaction-based administration server; and
FIG. **3** illustrates, in a flow diagram, the steps of an administration serving method in accordance with an embodiment of the present invention.

### DETAILED DESCRIPTION OF THE PREFERRED EMBODIMENTS

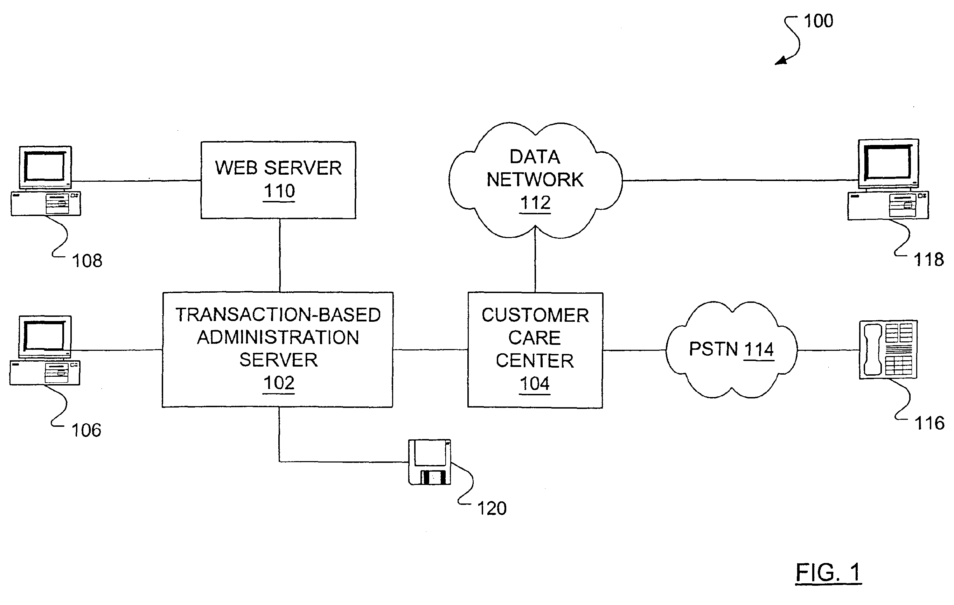

FIG. **1** illustrates a communication system **100** including various channels through which customers may contact a customer care center **104** and channels through which customer care center **104** may be administered. A connection to customer care center **104** is maintained by a transaction-based administration server **102.** An administrator may communicate with transaction-based administration server **102** through the use of a user interface at either a thick client **106** or a thin client **108,** where the latter presents the user interface as served by a hypertext transfer protocol server **110** (also known as HTTP server, world wide web server or just web server). A customer at telephone station apparatus **116** may call a customer care center **104** over a voice link, say via a public switched telephone network (PSTN) **114**. Alternatively, a customer at a terminal **118** may contact a customer care center **104** via a data network **112** like the Internet. Transaction-based administration server **102** may be loaded with administration software for executing the method of this invention from software medium **120**, which could be a disk, tape, chip or random access memory containing a file downloaded from a remote source.

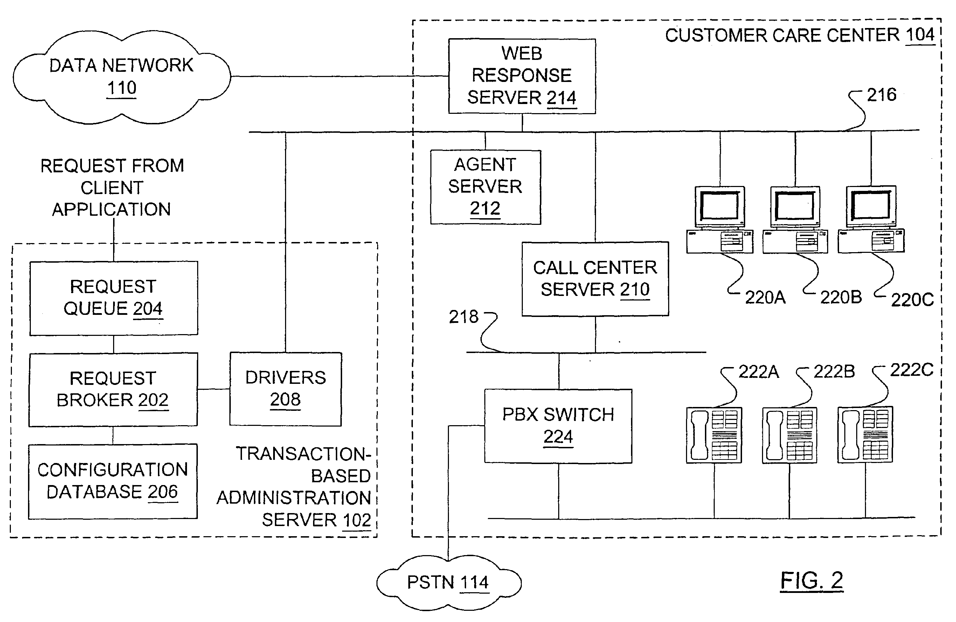

Components of both customer care center **104** and transaction-based administration server **102** are in evidence in FIG. **2**. Transaction-based administration server **102** includes a request broker **202,** a request queue **204,** a configuration database **206** and a set of configuration drivers **208** which facilitate communication with various servers comprising customer care center **104.** A call center server **210**, which is a component of customer care center **104,** connects, via an embedded LAN (ELAN) **218**, to a PBX switch **224** and also connects to a customer LAN (CLAN) **216.** Each agent at the customer care center **104** may be equipped with one of a number of telephone station apparatus **222A, 222B, 222C** and one of a number of terminals **220A, 220B, 220C.** For instance, an Agent "A" may have access to telephone station apparatus **222A** and terminal **220A.** While terminals **220A, 220B, 220C** connect to CLAN **216,** telephone station apparatus **222A, 222B, 222C** connect to PBX switch **224,** which maintains a link to PSTN **114.** Also connected to CLAN **216** may be a web response server **214,** maintaining a link to data network **110,** and an agent server **212.**

Initially, an administrator defines the location and type of each server in a given network. Any of the servers, which may act as media gateways (i.e. any of servers **210, 212** and **214** but not administration server **102**), may then be logically collected into administrative groups by the administrator. For instance, servers that have synchronized configuration data may be grouped together. Transaction-based processing techniques may then be used to configure, maintain and administer the configuration data for the servers in each administrative group. For instance, with reference to FIG. **1** and **2**, an administration session may be opened, via request queue **204** of transaction-based administration server **102,** through the use of a user interface application run on thick **106** or thin **108** client, and administrative tasks may be executed on one of the administrative groups.

A transaction is a sequence of information exchanges and related work (such as database updates) that is treated as a single unit for the purposes of satisfying a request. For a transaction to be considered complete (for instance, database changes to be made permanent) a transaction has to be completed in its entirety. Transaction-based processing is a type of computer processing in which a computer responds to user requests. Each request is considered to be a transaction. Automatic teller machines for banks are an example of an application of transaction-based processing.

Returning to FIG. **2**, the components of transaction-based administration server **102** may be examined in detail. Configuration database **206** stores information on the location and type of each server in the network. Information stored on configuration database **206** related to a particular server may include the transaction types possible at the server, the server's network address, the server type and a log of transaction information for auditing purposes. Request queue **204** is preferably a software component that stores and submits transaction requests to request broker **202** and maintains the state of a session at a client (i.e. whether the client is connected or disconnected). Request queue **204** may proxy an administrative transaction on behalf of the client so that the client does not have to remain connected to the server while the transaction executes. The transaction result may be stored by request queue **204** and transmitted to the client when the client reconnects to the server. Request broker **202** executes administrative transactions on an administrative group of servers. Note that there can be more than one administrative group, request broker **202** will roll-back a transaction if it cannot be completed on an entire administrative group of servers, and transaction execution details may be recorded by request broker **202** for auditing purposes. Configuration drivers **208** are software components that manage connectivity to servers in the network. Specifically, a particular configuration driver **208,** associated with a particular server, has an ability to set up and to break down a connection between the particular server and request broker **202,** as required. Data is passed by a configuration driver **208** from request broker **202** to a particular type of server depending on the transaction type. The transaction may then be executed on the server.

Returning to FIG. **1**, thick client **106** is an application that maintains persistent data on a client workstation and enables a user to perform administrative tasks, whereas, thin client **108** is an application that has no persistent data on the client workstation yet enables a user to perform administrative tasks. Typically, thin client **108** uses a Hyper-Text Markup Language (HTML) browser to launch an administrative application on a client workstation. Web server **110** is a component that provides the capability for browser-based administration, such as administration based at thin client **108.**

Consider customer care center **104** as illustrated in FIG. **2**. A particular administrator initializes a user interface application at thick client **106** (FIG. **1**) running, say, Microsoft™ Windows™ as an operating system. Using the user interface application, the administrator logs onto request broker **202** (for example, a Microsoft™ Transaction Server) through request queue **204**. Request broker **202** authenticates the administrator and presents a view of customer care center **104,** which view is specific to the particular administrator. The view of customer care center **104,** which may have been set up by the administrator at an earlier time, is retrieved by request broker **202** from a configuration database **206.** Also stored in configuration database **206** may be a record of capabilities and privileges for that particular administrator.

The administrator may wish to configure a new administrative group. Through requests made of request broker **202,** a new group may be opened and given a name, say "Group X". The administrator may then request that call center server **210** be added to Group X. The request, sent to request broker **202,** via request queue **204** (a Microsoft™ Message Queue Server, for instance), may include a name for call center server **210** and a network address. The request causes request broker **202** to initiate an appropriate driver, among a set of configuration drivers **208,** to be used for communicating with call center server **210.** Through the use of the appropriate driver, request broker **202** confirms that communication may be established with call center server **210.** Once satisfied of the availability of communication with call center server **210**, request broker **202** adds call center server to Group X, for this administrator. A similar procedure may be used to add web response server **214** and agent server **212** to Group X, for this administrator.

A number of data elements may be defined for the various servers in a group. However, where some data elements may be shared between all servers, many may be unique to a single server. For instance, both a call center server and a web response server require knowledge of a data element which specifies skillsets to associate with a particular agent, but only the web response server requires knowledge of a data element specifying the particular agent's e-mail address.

Once administrative groups are established, the administrator may perform administrative tasks with regard to an entire group. Using a client, the administrator may send a request to request broker **202.** The request from the client is analyzed using information relating to each server in the administrative group found in configuration database **206.** For each server in the administrative group, the data elements appropriate to the particular server are used in creating a message to the server. This message makes a request, corresponding to the administrator's request, in a format specific to the particular server. After receiving, from each server in the administrative group, a message indicating fulfillment of the request, request broker **202** may indicate to the client that the requested task was completed.

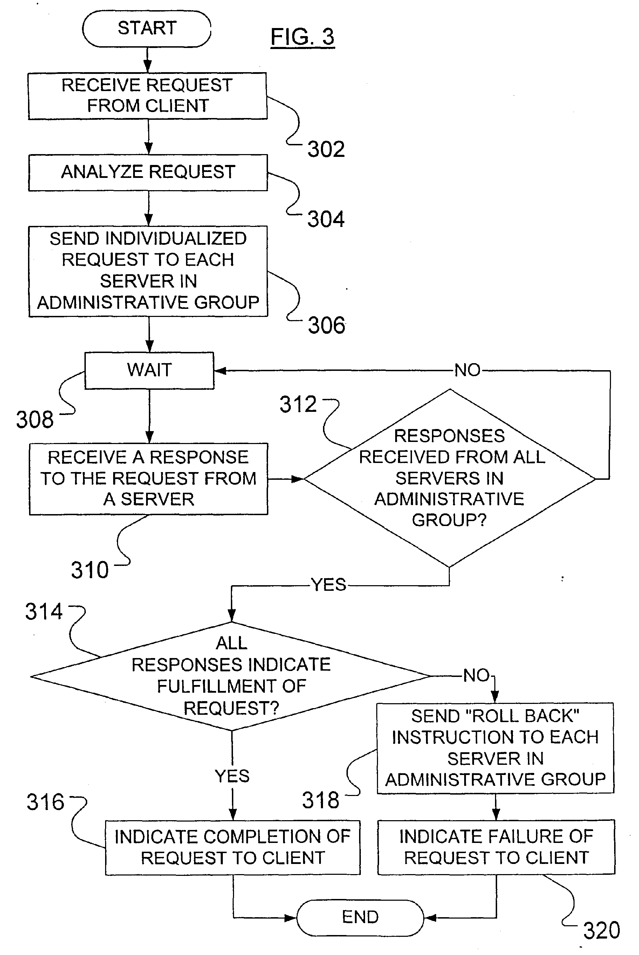

By way of example, referencing both FIG. **2** and FIG. **3**, once Group X is established, the administrator may add a new agent to Group X. The administrator creates a request for the addition of the new agent by specifying, via the user interface, information relating to the agent such as a name, a directory number for the agent's phone, an e-mail address, a network address for the agent's terminal, skillsets with which the agent is associated, etc. The specifications of the new agent are sent to request broker **202** in a request message. Request broker **202** first receives the request message (step **302**). Subsequently, request broker **202** analyzes the request message (step **304**) received from the client, determining, from information in configuration database **206,** which servers are members of Group X and which data elements are to be included in an "add agent" request for each server in Group X. Request broker **202** then sends an "add agent" request (step **306**) to each server in Group X, namely call center server **210**, web response server **214** and agent server **212**. An "add agent" request to call center server **210**, for instance, might include the agent's name, a directory number for the agent's phone and skillsets with which the agent is associated. Once requests have been sent to each server in Group X, request broker **202** waits (step **308**) for responses. Request broker **202** receives responses (step **310**) from the servers. After determining that responses have been received from all servers (step **312**), request broker **202** determines which of the responses indicate fulfillment of the "add agent" request (step **314**). If all responses indicate fulfillment of the "add agent" request, request broker **202** indicates to the client (step **316**) that the agent has been added to Group X. However, if even one server indicates a failure to perform the request, request broker **202** indicates to all servers to "roll back" the request (step **318**). That is, the servers are instructed to return to the state that preceded the request. Request broker **202** then indicates to the client (step **320**) that the request to add an agent to Group X has failed.

Note that a second administrator may be making requests of request broker **202** and that the presentation order of requests from varied sources is determined by request queue **204.** Note, also, that the second administrator may define administrative groups differently than other administrators, dependent on the second administrator's privileges and responsibilities within the organization. For instance, the second administrator may be responsible for all the web response servers in network of customer care centers. The view presented by request broker **202** to the second administrator via the user interface application in use by the second administrator would then be different from the view presented to other administrators with different responsibilities.

As will be apparent to a person skilled in the art, particularly where request broker **202** (FIG. **2**) is a Microsoft™ Transaction Server, programming objects, allowing transaction-based administration server **102** (FIG. **2**) to perform the method of the present invention, can be written using virtually any object-oriented programming language.

Other modifications will be apparent to those skilled in the art and, therefore, the invention is defined in the claims.

## Claims

1. A method of administering heterogeneous media gateways comprising:
receiving, from a client, a request relating to an administrative group, where said administrative group comprises a plurality of heterogeneous media gateways;
using transaction-based processing techniques,
communicating a gateway specific request, based on said received request, to each said media gateway in said administrative group; and
receiving a response to said gateway specific request from each said media gateway in said administrative group.

2. The method of claim 1 further comprising, after said receiving a response from each said media gateway, where each said response is an indication of fulfillment of said gateway specific request, communicating fulfillment of said received request to said client.

3. The method of claim 1 further comprising, after said receiving a response from each said media gateway, where one said response is an indication of a failure to meet said gateway specific request,
communicating a gateway specific command to roll back said request to each said media gateway in said administrative group; and
communicating said failure to meet said received request to said client.

4. The method of claim 1 further comprising analyzing said received request to determine said administrative group to which said received request relates.

5. The method of claim 4 further comprising determining which said media gateways comprise said administrative group.

6. The method of claim 5 wherein said determining comprises querying a database.

7. The method of claim 1 including:
determining, for each media gateway in said group, data elements of said request applicable to said each media gateway; and
formulating said gateway specific request using said determined data elements.

8. A transaction-based administration server comprising:
a request queue for receiving, from a client, a request relating to an administrative group, where said administrative group comprises a plurality of heterogeneous media gateways; and
a request broker for, responsive to said request queue, using transaction-based processing techniques,
communicating a gateway specific request, based on said received request, to each said media gateway in said administrative group; and
receiving a response to said gateway specific request from each said media gateway in said administrative group.

9. The administration server of claim 8 further comprising a database for storing a membership for said administrative group and configuration information for each gateway of said administration group and wherein said request broker is also responsive to said database.

10. The administration server of claim 8 further comprising a plurality of drivers, each said driver for driving a given one of said plurality of media gateways for facilitating said communicating said request to said given media gateway.

11. A transaction-based administration server operable to:
receive a request relating to an administrative group, where said administrative group comprises a plurality of heterogeneous media gateways;
using transaction-based processing techniques,
communicate a gateway specific request, based on said received request, to each said media gateway in said administrative group; and
receive a response to said gateway specific request from each said media gateway in said administrative group.

12. A computer readable media product for providing program control to a processor, said processor included in a transaction-based administration server, said computer readable media product adapting said processor to be operable to:
receive a request relating to an administrative group, where said administrative group comprises a plurality of heterogeneous media gateways;
using transaction-based processing techniques,
communicate a gateway specific request, based on said received request, to each said media gateway in said administrative group; and
receive a response to said gateway specific request from each said media gateway in said administrative group.

13. A method of configuring an administrative group comprising:
receiving, from a client, an indication of a media gateway to add to an administrative group and an administrator with which to associate said administrative group; and
adding said media gateway to said administrative group associated with said administrator.

14. The method of claim 13 wherein said indication includes a network address for said media gateway.

15. The method of claim 13 wherein said indication includes an indication of a server type of said media gateway.

16. The method of claim 13 wherein said indication includes an indication of a possible transaction type for said media gateway.
